# EUROPEAN PATENT APPLICATION

(11) **EP 4 675 321 A1**
(43) Date of publication of application: **07.01.2026**
(21) Application number: 25151100.2
(22) Date of filing: 10.01.2025
(51) Int. Cl.: G02B 6/122, G02B 6/30, G02B 6/12

(54) **OPTICAL SIGNAL BLOCKERS FOR A PHOTONIC CHIP**

(30) Priority: 01.07.2024 US 202418760225
(71) Applicant: GlobalFoundries U.S. Inc., Malta, NY 12020 (US)
(72) Inventor: Dash, Aneesh, 560045 Bangalore (IN); Bian, Yusheng, Malta, 12020 (US); Minasamudram, Rupa Gopinath, 560045 Bangalore (IN); Sridharan, Ramya, 560045 Bangalore (IN); Siegmund, Robert, 01109 Dresden (DE)
(74) Representative: Grünecker Patent- und Rechtsanwälte PartG mbB

(57) **Abstract**

Structures for a photonic chip that include an optical signal blocker and methods of forming such structures. The structure comprises a semiconductor substrate, an optical signal blocker including a metal sheet and a plurality of openings in the first metal sheet, and a waveguide core between the semiconductor substrate and the optical signal blocker. The waveguide core includes a portion that is overlapped by the optical signal blocker.

## Description

### BACKGROUND

The disclosure relates to photonic chips and, more specifically, to structures for a photonic chip that include an optical signal blocker and methods of forming such structures.

Photonic chips are used in many applications and systems including, but not limited to, data communication systems and data computation systems. A photonic chip includes a photonic integrated circuit comprised of photonic components, such as modulators, polarizers, and couplers, that are used to manipulate light received from a light source, such as an optical fiber or a laser.

An edge coupler, also known as a spot-size converter, is a type of photonic device that is commonly used for coupling light of a given mode from a light source to a photonic integrated circuit. The edge coupler may include a section of a waveguide core that defines an inverse taper having a tip. The narrow end of the inverse taper at the tip is positioned adjacent to the light source. The wide end of the inverse taper is connected to another section of the waveguide core that guides and routes the light to the photonic integrated circuit.

The gradual variation in the cross-sectional area of the inverse taper supports mode transformation and mode size variation associated with mode conversion when light is transferred from the light source to the edge coupler. The inverse taper is initially unable to fully confine the incident mode received from the light source because the cross-sectional area of the tip is considerably smaller than the mode size. Consequently, a significant percentage of the electromagnetic field of the incident mode is distributed about the tip of the inverse taper. As its width dimension increases, the inverse taper can eventually support the entire incident mode.

Multi-Project Wafer services may be used to fabricate multiple photonic integrated circuit designs for different customers on a single wafer. Multi-Project Wafer services provide a cost-effective mechanism for customers with smaller-scale projects or research efforts to access fabrication facilities without bearing the full cost of a full set of masks. When the wafer is shipped to a specific customer, the macros or designs of other customers may be accessible.

Improved structures for a photonic chip that include an optical signal blocker and methods of forming such structures are needed.

### SUMMARY

In an embodiment of the invention, a structure is provided for a photonic chip. The structure comprises a semiconductor substrate, an optical signal blocker including a metal sheet and a plurality of openings in the first metal sheet, and a waveguide core between the semiconductor substrate and the optical signal blocker. The waveguide core includes a portion that is overlapped by the optical signal blocker.

In an embodiment of the invention, a structure is provided for a photonic chip. The structure comprises a semiconductor substrate, an optical signal blocker including a plurality of metal features, and a waveguide core between the semiconductor substrate and the optical signal blocker. The waveguide core includes a portion that is overlapped by the optical signal blocker.

In an embodiment of the invention, a method of forming a structure for a photonic chip is provided. The method comprises forming a waveguide core and forming an optical signal blocker including a metal sheet and a plurality of openings in the metal sheet. The waveguide core is disposed between a semiconductor substrate and the optical signal blocker, and the waveguide core includes a portion that is overlapped by the optical signal blocker.

### BRIEF DESCRIPTION OF THE DRAWINGS

The accompanying drawings, which are incorporated in and constitute a part of this specification, illustrate various embodiments of the invention and, together with a general description of the invention given above and the detailed description of the embodiments given below, serve to explain the embodiments of the invention. In the drawings, like reference numerals refer to like features in the various views.
FIG. 1 is a top view of a structure at an initial fabrication stage of a processing method in accordance with embodiments of the invention.
FIG. 1A is a cross-sectional view taken generally along line 1A-1A in FIG. 1.
FIG. 2 is a top view of the structure at a fabrication stage of the processing method subsequent to FIGS. 1, 1A.
FIG. 2A is a cross-sectional view taken generally along line 2A-2A in FIG. 2.
FIG. 3 is a top view of the structure at a fabrication stage of the processing method subsequent to FIGS. 2, 2A.
FIG. 3A is a cross-sectional view taken generally along line 3A-3A in FIG. 3.
FIG. 4 is a cross-sectional view of a structure in accordance with alternative embodiments of the invention.
FIG. 5 is a cross-sectional view of a structure in accordance with alternative embodiments of the invention.
FIG. 6 is a cross-sectional view of a structure in accordance with alternative embodiments of the invention.
FIG. 7 is a top view of a structure in accordance with alternative embodiments of the invention.
FIG. 7A is a cross-sectional view taken generally along line 7A-7A in FIG. 7.

### DETAILED DESCRIPTION

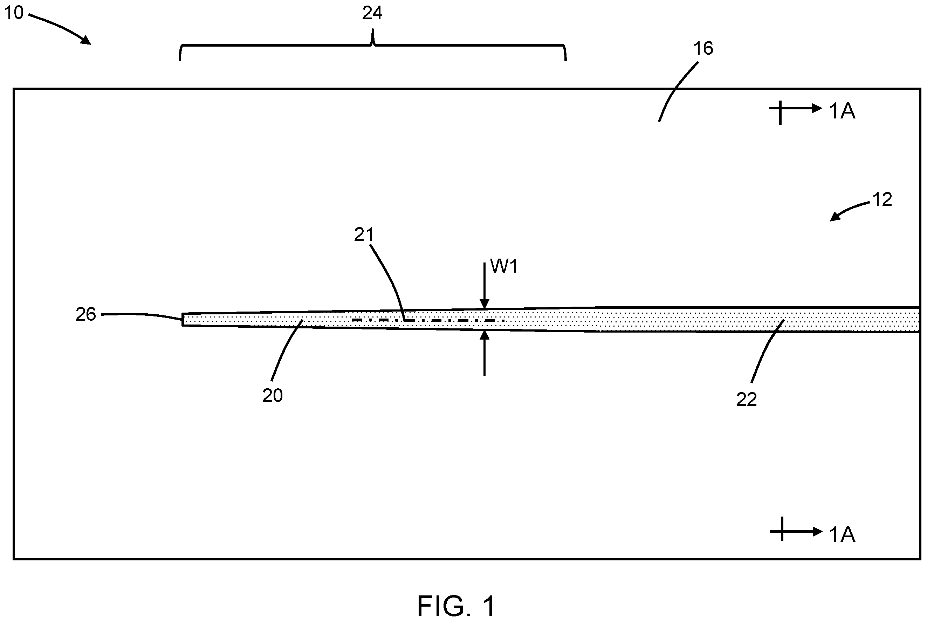

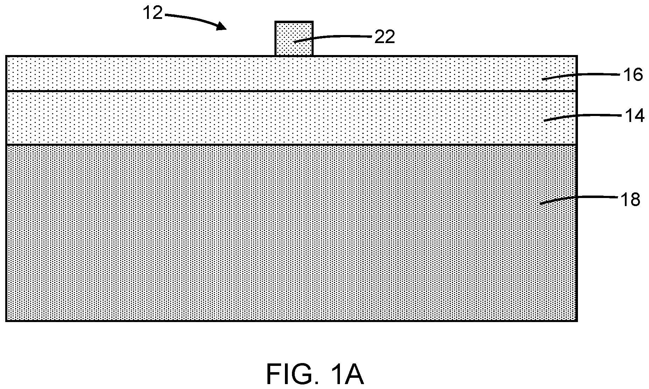

With reference to FIGS. 1, 1A and in accordance with embodiments of the invention, a structure 10 for a photonic chip includes a waveguide core 12 that is positioned on, and over, a dielectric layer 14, a dielectric layer 16, and a semiconductor substrate 18. In an embodiment, the dielectric layers 14, 16 may be comprised of a dielectric material, such as silicon dioxide, and the semiconductor substrate 18 may be comprised of a semiconductor material, such as single-crystal silicon. The waveguide core 12 is separated from the semiconductor substrate 18 by the dielectric material of the intervening dielectric layers 14, 16, which operate as low-index cladding between the waveguide core 12 and the semiconductor substrate 18. In an alternative embodiment, the dielectric layer 16 may be omitted such that only the dielectric layer 14 is positioned between the waveguide core 12 and the semiconductor substrate 18.

In an embodiment, the waveguide core 12 may be comprised of a material having a refractive index that is greater than the refractive index of silicon dioxide. In an embodiment, the waveguide core 12 may be comprised of a dielectric material, such as silicon nitride. In an alternative embodiment, the waveguide core 12 may be comprised of a different dielectric material, such as silicon oxynitride or aluminum nitride. In an alternative embodiment, the waveguide core 12 may be comprised of a semiconductor material, such as single-crystal silicon, amorphous silicon, or polycrystalline silicon. In alternative embodiments, other materials, such as a III-V compound semiconductor or a polymer, may be used to form the waveguide core 12.

In an embodiment, the waveguide core 12 may be formed by patterning a layer with lithography and etching processes. In an embodiment, an etch mask may be formed by the lithography process over the layer to be patterned, and unmasked sections of the layer may be etched and removed by the etching process. The masked sections of the layer may determine the patterned shape of the waveguide core 12. In an embodiment, the waveguide core 12 may be formed by patterning a deposited layer comprised of its constituent material (e.g., silicon nitride). In an alternative embodiment, the waveguide core 12 may be formed by patterning the semiconductor material (e.g., single-crystal silicon) of the device layer of a silicon-on-insulator substrate in which the underlying dielectric layer 14 is a buried oxide layer and the dielectric layer 16 is omitted. In an alternative embodiment, the waveguide core 12 may be a rib waveguide or a slot waveguide instead of a ridge waveguide as in the representative embodiment.

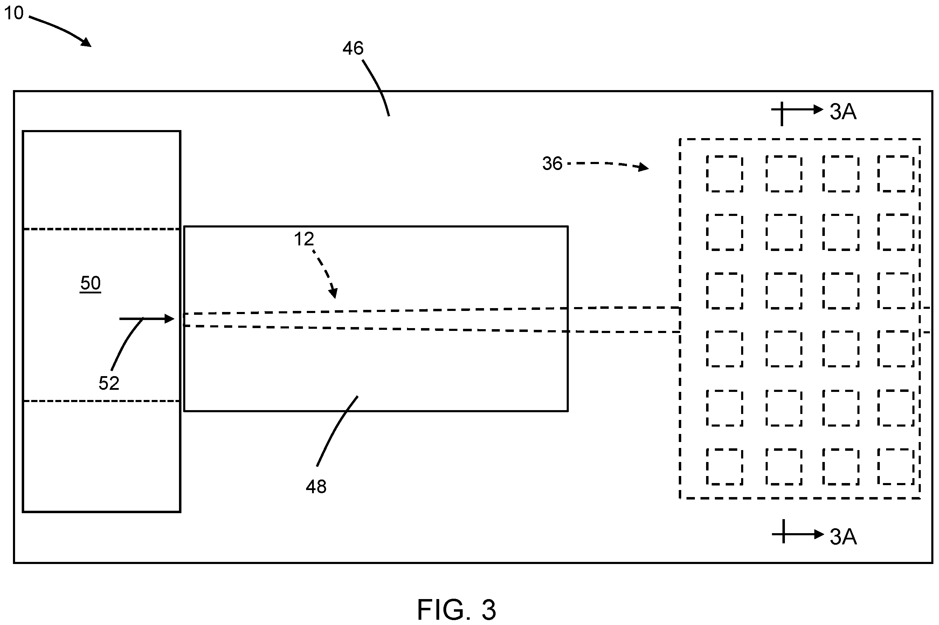

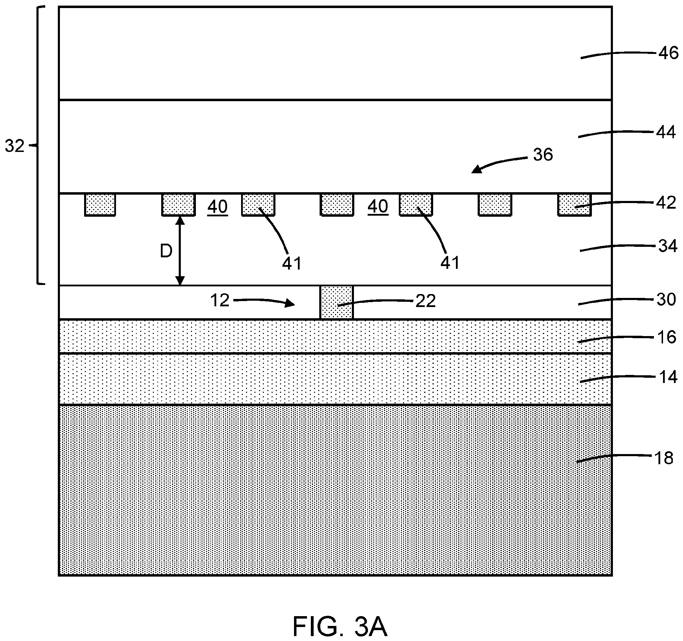

The waveguide core 12 may include a longitudinal axis 21, a tapered section 20 that is configured to function as an edge coupler 24, and a width dimension W1. The waveguide core 12 has a cross-sectional profile determined by the width dimension W1 and its thickness. The width dimension W1 and cross-sectional profile may vary over the length of the tapered section 20. The waveguide core 12 terminates at a facet 26 and, more specifically, the width dimension W1 and cross-sectional profile of the waveguide core 12 narrow in size over the length of the tapered section 20 with the narrowest width dimension at the facet 26. The tapered section 20 of the waveguide core 12 may be connected by a section 22 of the waveguide core 12 to a photonic integrated circuit of the photonic chip such that light can be received from a light source 44 (FIG. 3), such as an optical fiber or a laser, at the facet 26 and transferred by the edge coupler 24 to the photonic integrated circuit. The section 22 of the waveguide core 12 may have a width dimension W1 and cross-sectional profile that is constant. The mode evolution of light propagating through the tapered section 20 of the edge coupler 24 may be adiabatic, or substantially adiabatic, in that variations in the width dimension W1 and related cross-sectional profile of the tapered section 20 are sufficiently slow and smooth to render coupling to other modes and radiative losses negligible or below an operationally-acceptable level.

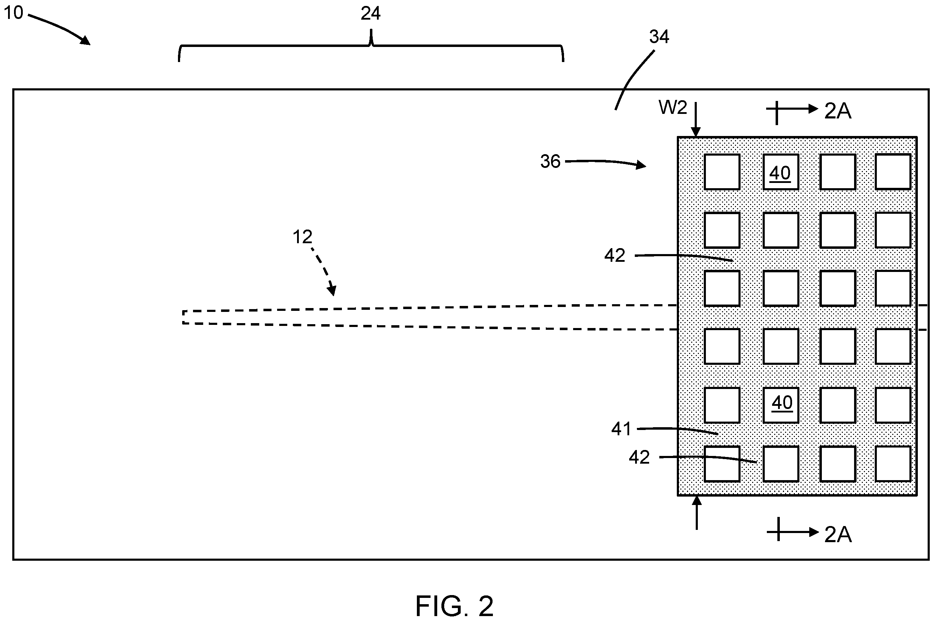

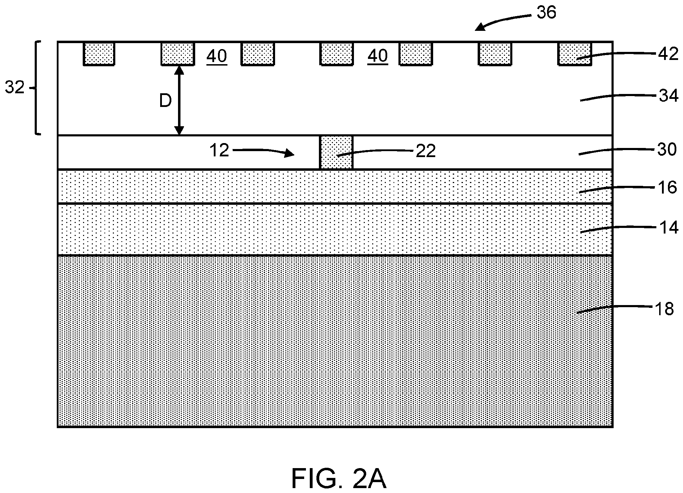

With reference to FIGS. 2, 2A in which like reference numerals refer to like features in FIGS. 1, 1A and at a subsequent fabrication stage, a dielectric layer 30 may be formed over the waveguide core 12. The dielectric layer 30 may be comprised of a dielectric material, such as silicon dioxide, that is deposited and planarized. The edge coupler 24 may be fully embedded in the dielectric layer 30, which provides low-index cladding.

A back-end-of-line stack 32 may be formed over the structure 10. The back-end-of-line stack 32 may include a metallization level having a dielectric layer 34 that is comprised of a dielectric material, such as silicon dioxide, silicon nitride, tetraethylorthosilicate silicon dioxide, or fluorinated-tetraethylorthosilicate silicon dioxide. The back-end-of-line stack 32 may include multiple metallization levels including dielectric layers that are arranged in a layer stack over the dielectric layer 30.

An optical signal blocker 36 may be formed in the metallization level of the back-end-of-line stack 32 that includes the dielectric layer 34. The optical signal blocker 36 overlaps with a portion of the waveguide core 12, which is disposed between the optical signal blocker 36 and the semiconductor substrate 18. In an embodiment, the optical signal blocker 36 may overlap with a portion of the section 22 of the waveguide core 12. In an embodiment, the metallization level including the dielectric layer 34 and the optical signal blocker 36 may be the closest metallization level to the waveguide core 12. In an alternative embodiment, the metallization level including the dielectric layer 34 and the optical signal blocker 36 may not be the closest to the waveguide core 12, and additional dielectric layers associated with one or more intervening metallization levels of the back-end-of-line stack 32 may be positioned between the optical signal blocker 36 and the waveguide core 12. The optical signal blocker 36 has a width dimension W2 that is greater than the width dimension W1 of the waveguide core 12, which permits the optical signal blocker 36 to fully overlap with the portion of the waveguide core 12.

In an embodiment, the optical signal blocker 36 may be a sheet 42 that includes multiple openings 40 distributed within the outer perimeter of the sheet 42. The openings 40 extend as perforations through the sheet 42. In an embodiment, the sheet 42 may be planar with a uniform thickness and the openings 40 may extend as perforations fully through the sheet 42. In an embodiment, the sheet 42 of the optical signal blocker 36 may have a lower planar surface facing toward the waveguide core 12, an upper planar surface facing away from the waveguide core 12, and each opening 40 may extend from the upper planar surface to the lower planar surface. In an embodiment, the openings 40 in the sheet 42 may be distributed in a pattern. In an embodiment, the openings 40 in the sheet 42 may be distributed in the rows and columns of a two-dimensional array. In an embodiment, the sheet 42 may be centered over the overlapped portion of the waveguide core 12.

The perforated sheet 42 of the optical signal blocker 36 may be comprised of a metal, such as copper or aluminum. The metallization level including the dielectric layer 34 and the optical signal blocker 36 may be formed by a damascene process using deposition, polishing, lithography, and etching techniques. Specifically, the dielectric layer 34 may be deposited and patterned using lithography and etching processes to define trenches that are filled by a planarized metal (e.g., copper or aluminum) to define the optical signal blocker 36. In an embodiment, the openings 40 may have a rectangular or square shape viewed from a perspective normal to the semiconductor substrate 18. In an alternative embodiment, the openings 40 may have a non-rectangular shape viewed from a perspective normal to the semiconductor substrate 18. In an embodiment, the openings 40 in the sheet 42 may have a critical dimension of greater than or equal to 1 micrometer. In an embodiment, the openings 40 in the sheet 42 may have a critical dimension within a range of 1 micrometer to 10 micrometers.

In an embodiment, the overlapped portion of the waveguide core 12 and, in particular, the overlapped portion of the section 22 of the waveguide core 12 may be laterally positioned between an adjacent pair of the rows of the openings 40. The distance D between the sheet 42 of the optical signal blocker 36 and the overlapped portion of the waveguide core 12 is selected to enable the optical signal blocker 36 to block and absorb light propagating from the edge coupler 24 to the photonic integrated circuit and/or to block and absorb light propagating from the photonic integrated circuit to the edge coupler 24. The light may interact with electrons in the metal of the sheet 42 of the optical signal blocker 36 by a plasmonic mechanism to block and absorb propagating light.

In an embodiment, the density (i.e., the ratio of solid material to open space) of the openings 40 in the sheet 42 may be less than or equal to 0.5 in order to optimize the light blocking ability of the optical signal blocker 36. The optical signal blocker 36 may provide high light absorption over a short length such that the optical signal blocker 36 is characterized by a compact footprint. The optical signal blocker 36 may also be characterized by improved manufacturability, in comparison with a solid sheet, because of the presence of the openings 40 that perforate the sheet 42.

In alternative embodiments, the optical signal blocker 36 may be deployed over a different type of photonic device. In particular, the optical signal blocker 36 may be deployed over a passive photonic device or over an active photonic device.

With reference to FIGS. 3, 3A in which like reference numerals refer to like features in FIGS. 2, 2A and at a subsequent fabrication stage, additional metallization levels of the back-end-of-line stack 32 may be formed over the metallization level that includes the optical signal blocker 28. The additional metallization levels may include a stack of dielectric layers 45, 46 over the dielectric layer 34. A dielectric layer 48 that may be formed that replaces a removed portion of the back-end-of-line stack 32 directly over the edge coupler 24. The dielectric layer 48 may be comprised of a homogenous dielectric material, such as silicon dioxide.

A light source 50 may be placed adjacent to facet 26 of the edge coupler 24. The light source 50 may include a light output 52 that is aligned with the facet 26 of the edge coupler 24 and that is configured to provide light in a mode propagation direction toward the facet 26 of the edge coupler 24. In an embodiment, the light source 50 may be an optical fiber, such as a single-mode optical fiber, that includes a tip portion placed adjacent to the facet 26 of the edge coupler 24. The optical signal blocker 36 blocks the passage of light between the light source 50 and the photonic integrated circuit.

In an alternative embodiment, the light source 50 may be a laser chip that includes a semiconductor laser configured to output light from the light output 52 in an infrared wavelength range. In an embodiment, the laser chip may include a laser comprised of III-V compound semiconductor materials. In an embodiment, the laser chip may include an indium phosphide/indium-gallium-arsenic phosphide laser that is configured to generate continuous laser light in an infrared wavelength range. In an alternative embodiment, the light source 50 may include a photonic bump having internal turning mirrors and internal lensed mirrors that collaborate to collimate and focus light received from an optical fiber and provide the collimated, focused light to the edge coupler 24.

The optical signal blocker 36 may be used to selectively block one or more optical inputs and outputs on a photonic chip and, therefore, prevent light transfer to and/or from certain photonic components on the photonic chip. The optical signal blocker 36 may be deployed in the photonic chips of a wafer fabricated by Multi-Project Wafer services that includes photonic chips fabricated on the wafer for different customers. The light blockage for selected optical inputs and outputs of the photonic chips may be used to secure proprietary photonic components of the different customers by rendering the macros or designs of the different customers unusable. The optical signal blocker 36 may also be used in a photonic integrated circuit to prevent stray light effects and/or to absorb light in selected optical paths.

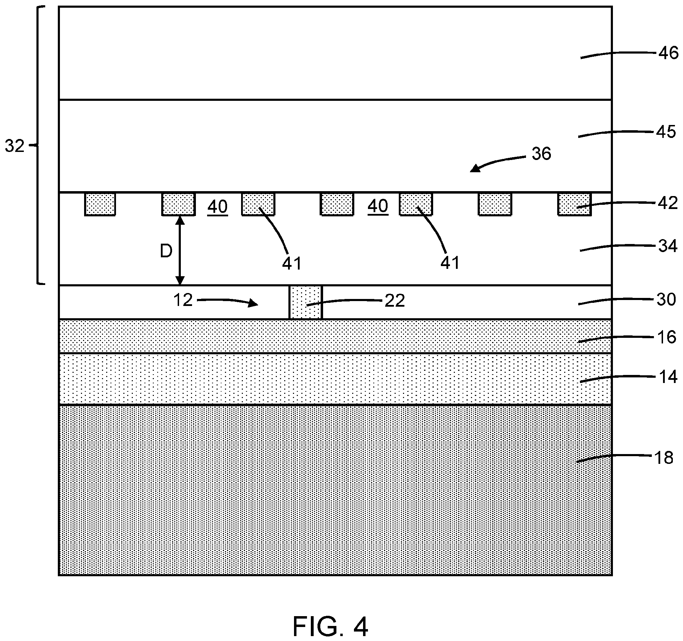

With reference to FIG. 4 and in accordance with alternative embodiments, the optical signal blocker 36 may be shifted laterally such that the openings 40 in the sheet 42 are aligned with the waveguide core 12 in an overlapping relationship. In an embodiment, the openings 40 that are aligned with the waveguide core 12 may be arranged in a row. The alignment of the waveguide core 12 with the openings 40 may reduce the amount of metal that is directly over, and aligned with, the waveguide core 12.

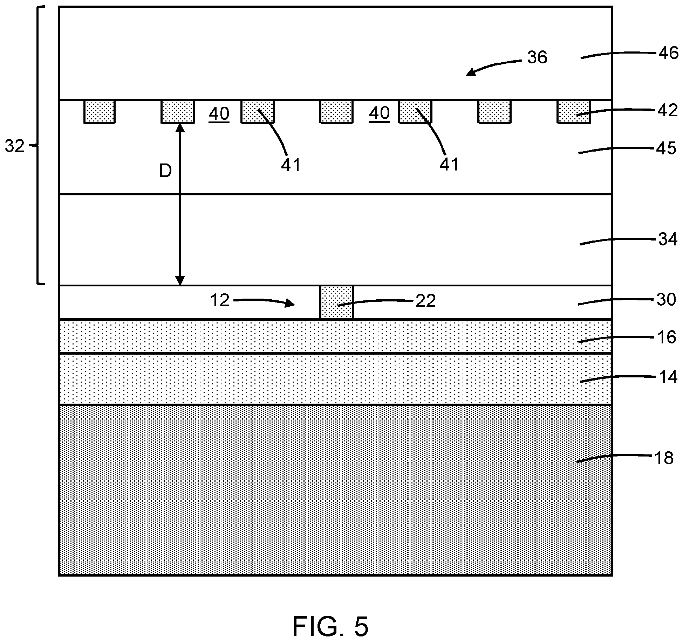

With reference to FIG. 5 and in accordance with alternative embodiments, the optical signal blocker 36 may be shifted upwardly such that the optical signal blocker 36 is not formed in the metallization level associated with dielectric layer 34 but is instead formed in the metallization level associated with dielectric layer 45. The distance D may be increased by the upwardly shift of the optical signal blocker 36, which may introduce an additional thickness of dielectric material between the overlapped portion of the waveguide core 12 and the optical signal blocker 36.

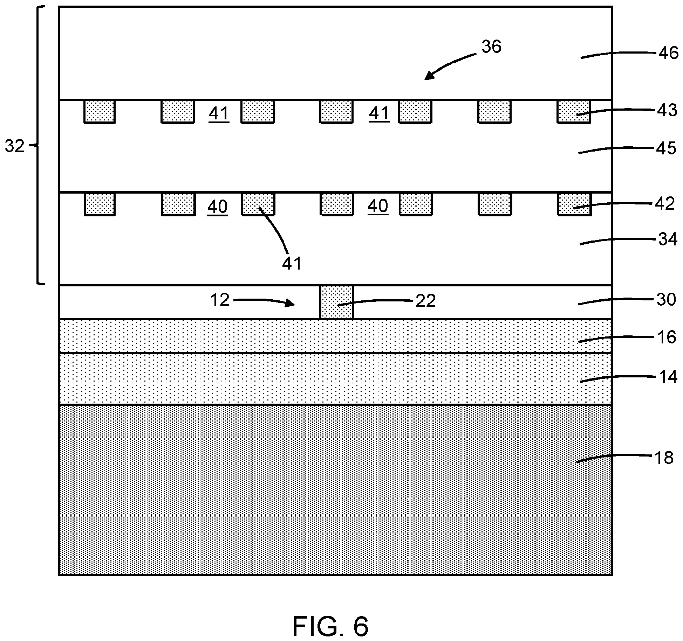

With reference to FIG. 6 and in accordance with alternative embodiments, the optical signal blocker 36 may further include another sheet 43 with openings 41 that is formed in another metallization level of the back-end-of-line stack 32. The sheet 43 and the openings 41 in the sheet 43 are similar or identical to the sheet 42 and the openings 40 in the sheet 42. The sheet 42 may be vertically disposed between the sheet 43 and the overlapped portion of the waveguide core 12. In an embodiment, the openings 41 in the sheet 43 may overlap with the openings 40 in the sheet 42. In an embodiment, the openings 41 in the sheet 43 may have a nonoverlapping relationship with the openings 40 41 in the sheet 42. The presence of multiple sheets 42, 43 may reinforce and strength the ability of the optical signal blocker 36 to block and absorb light propagating in the waveguide core 12 and, therefore, prevent light transfer to and/or from certain photonic components on the photonic chip.

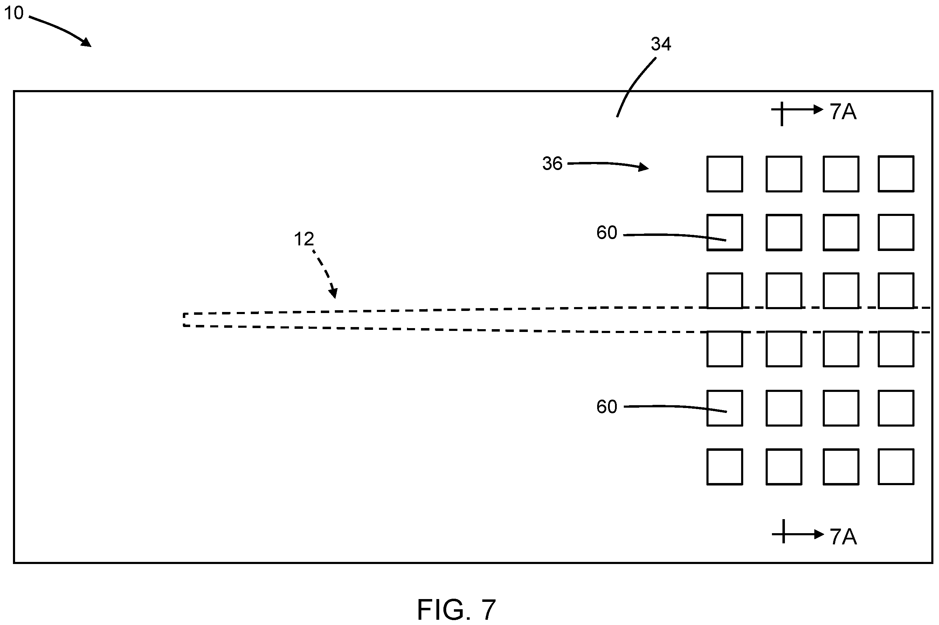

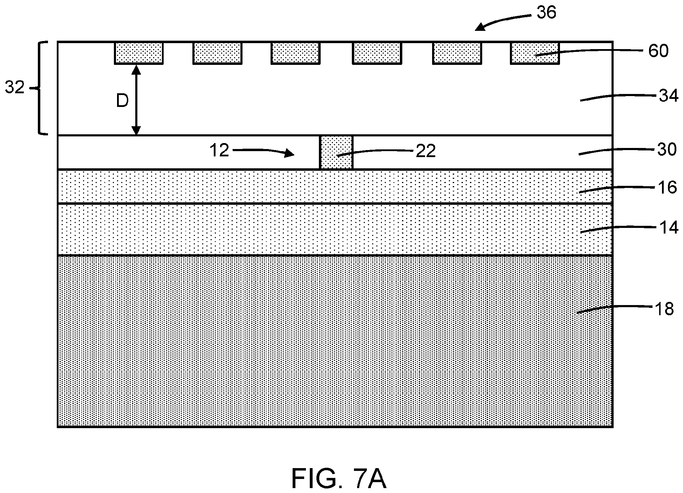

With reference to FIGS. 7, 7A and in accordance with alternative embodiments, the optical signal blocker 36 may includes a pattern of metal features 60 that overlap with a portion of the waveguide core 12. In an embodiment, the metal features 60 of the optical signal blocker 36 may be arranged in the rows and columns of a two-dimensional array. In an embodiment, the metal features 60 in each row of the array may have a uniform pitch. In an embodiment, the metal features 60 in each column of the array may have a uniform pitch. In an embodiment, one of the rows of the metal features 60 may be aligned with the overlapped portion of the waveguide core 12. In an embodiment, the overlapped portion of the waveguide core 12 may be laterally positioned between an adjacent pair of the rows of the metal features 60. The metal features 60 of the optical signal blocker 36 are effective to block and absorb light propagating in the waveguide core 12 and, therefore, prevent light transfer to and/or from certain photonic components on the photonic chip.

The metal features 60 may be formed in an inverse pattern to the pattern of openings 40 in the sheet 42. In an embodiment, the metal features 60 may be either square or rectangular from a perspective normal to the semiconductor substrate 18. In an embodiment, the metal features 60 may be either round or oblong from a perspective normal to the semiconductor substrate 18. In an embodiment, the metal features 60 may have a uniform size. In an alternative embodiment, the optical signal blocker 36 may include an additional array of metal features formed in a metallization level of the back-end-of-line stack 32 over the metal features 60.

The metal features 60 may be dimensioned and positioned at small enough pitch so as to define a sub-wavelength grating that does not radiate or reflect light at a wavelength of operation. For example, the periodicity of the metal features 60 may be less than one-half the wavelength of the light propagating in the waveguide core 12. The dielectric material of the dielectric layer 34 is positioned in the spaces between the metal features 60 such that a metamaterial structure may be defined in which the material constituting the metal features 60 has a higher refractive index than the dielectric material of the dielectric layer 34. The metamaterial structure can be treated as a homogeneous material having an effective refractive index that is intermediate between the refractive index of the material constituting the metal features 60 and the refractive index of the dielectric material constituting the dielectric layer 34.

The methods as described above are used in the fabrication of integrated circuit chips. The resulting integrated circuit chips can be distributed by the fabricator in raw wafer form (e.g., as a single wafer that has multiple unpackaged chips), as a bare die, or in a packaged form. The chip may be integrated with other chips, discrete circuit elements, and/or other signal processing devices as part of either an intermediate product or an end product. The end product can be any product that includes integrated circuit chips, such as computer products having a central processor or smartphones.

References herein to terms modified by language of approximation, such as "about", "approximately", and "substantially", are not to be limited to the precise value or precise condition as specified. In embodiments, language of approximation may indicate a range of +/-10% of the stated value(s) or the stated condition(s).

References herein to terms such as "vertical", "horizontal", etc. are made by way of example, and not by way of limitation, to establish a frame of reference. The term "horizontal" as used herein is defined as a plane parallel to a conventional plane of a semiconductor substrate, regardless of its actual three-dimensional spatial orientation. The terms "vertical" and "normal" refer to a direction in the frame of reference perpendicular to the horizontal plane, as just defined. The term "lateral" refers to a direction in the frame of reference within the horizontal plane.

A feature "connected" or "coupled" to or with another feature may be directly connected or coupled to or with the other feature or, instead, one or more intervening features may be present. A feature may be "directly connected" or "directly coupled" to or with another feature if intervening features are absent. A feature may be "indirectly connected" or "indirectly coupled" to or with another feature if at least one intervening feature is present. A feature "on" or "contacting" another feature may be directly on or in direct contact with the other feature or, instead, one or more intervening features may be present. A feature may be "directly on" or in "direct contact" with another feature if intervening features are absent. A feature may be "indirectly on" or in "indirect contact" with another feature if at least one intervening feature is present. Different features may "overlap" if a feature extends over, and covers a part of, another feature.

The descriptions of the various embodiments of the present invention have been presented for purposes of illustration but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

In summary, structures for a photonic chip that include an optical signal blocker and methods of forming such structures are provided. An illustrative structure may comprises a semiconductor substrate, an optical signal blocker including a metal sheet and a plurality of openings in the first metal sheet, and a waveguide core between the semiconductor substrate and the optical signal blocker. Herein, the waveguide core includes a portion that is overlapped by the optical signal blocker.

The following embodiments are explicitly disclosed.
Embodiment 1:
   A structure for a photonic chip, the structure comprising:
   a semiconductor substrate;
   an optical signal blocker including a first metal sheet and a first plurality of openings in the first metal sheet; and
   a waveguide core between the semiconductor substrate and the optical signal blocker, the waveguide core including a first portion that is overlapped by the optical signal blocker.
Embodiment 2:
   The structure of embodiment 1, wherein the first plurality of openings are arranged in a two-dimensional array having a plurality of rows and a plurality of columns.
Embodiment 3:
   The structure of embodiment 2, wherein one of the rows overlaps with the first portion of the waveguide core.
Embodiment 4:
   The structure of embodiment 2 or 3, wherein the first portion of the waveguide core is laterally positioned between an adjacent pair of the rows.
Embodiment 5:
   The structure of one of embodiments 1 to 4, wherein the first metal sheet comprises copper or aluminum, and the waveguide core comprises silicon nitride.
Embodiment 6:
   The structure of one of embodiments 1 to 5, wherein the waveguide core includes a second portion adjacent to the first portion, the second portion terminates at a facet, and further comprising:
   a light source adjacent to the facet, the light source having a light output configured to provide light in a mode propagation direction toward the facet.
Embodiment 7:
   The structure of embodiment 6 wherein the light source is an optical fiber.
Embodiment 8:
   The structure of one of embodiments 1 to 7, further comprising:
   a back-end-of-line stack on the semiconductor substrate,
   wherein the first metal sheet of the optical signal blocker is disposed in the back-end-of-line stack.
Embodiment 9:
   The structure of embodiment 8, wherein the back-end-of-line stack includes a plurality of metallization levels each having a dielectric layer, and the first metal sheet of the optical signal blocker is disposed in the dielectric layer of the metallization level closest to the semiconductor substrate.
Embodiment 10:
   The structure of one of embodiments 1 to 9, wherein the first metal sheet of the optical signal blocker is spaced from the first portion of the waveguide core by a distance that permits the first metal sheet to block and absorb light propagating in the waveguide core.
Embodiment 11:
   The structure of one of embodiments 1 to 10, wherein the optical signal blocker includes a second metal sheet and a second plurality of openings in the second metal sheet, and the first metal sheet is disposed between the second metal sheet and the first portion of the waveguide core.
Embodiment 12:
   The structure of embodiment 11, wherein the second plurality of openings are aligned with the first plurality of openings.
Embodiment 13:
   The structure of one of embodiments 1 to 12, wherein the first plurality of openings have a critical dimension in a range between 1 micrometer and 10 micrometers.
Embodiment 14:
   The structure of one of embodiments 1 to 13, wherein the first metal sheet has a ratio of solid material to open space of less than or equal to 0.5.
Embodiment 15:
   A structure for a photonic chip, the structure comprising:
   a semiconductor substrate;
   an optical signal blocker including a plurality of metal features; and
   a waveguide core between the semiconductor substrate and the optical signal blocker, the waveguide core including a portion that is overlapped by the optical signal blocker.
Embodiment 16:
   The structure of embodiment 15, wherein the plurality of metal features are arranged in a two-dimensional array having a plurality of rows and a plurality of columns.
Embodiment 17:
   The structure of embodiment 16, wherein one of the rows overlaps with the portion of the waveguide core.
Embodiment 18:
   The structure of embodiment 16 or 17, wherein the portion of the waveguide core is laterally positioned between an adjacent pair of the rows.
Embodiment 19:
   The structure of one of embodiments 15 to 18, wherein the plurality of metal features comprise copper or aluminum, and the waveguide core comprises silicon nitride.
Embodiment 20:
   A structure for a photonic chip, the structure comprising:
   a semiconductor substrate;
   an optical signal blocker comprising a plurality of metal features and/or a first metal sheet with a first plurality of openings in the first metal sheet; and
   a waveguide core between the semiconductor substrate and the optical signal blocker, the waveguide core including a first portion that is overlapped by the optical signal blocker.
Embodiment 21:
   The structure of embodiment 20, wherein the first plurality of openings are arranged in a two-dimensional array having a plurality of rows and a plurality of columns.
Embodiment 22:
   The structure of embodiment 21, wherein one of the rows overlaps with the first portion of the waveguide core, and/or
   wherein the first portion of the waveguide core is laterally positioned between an adjacent pair of the rows.
Embodiment 23:
   The structure of one of embodiments 20 to 22, wherein the first metal sheet comprises copper or aluminum, and the waveguide core comprises silicon nitride.
Embodiment 24:
   The structure of one of embodiments 20 to 23, wherein the waveguide core includes a second portion adjacent to the first portion, the second portion terminates at a facet, and further comprising:
   a light source adjacent to the facet, the light source having a light output configured to provide light in a mode propagation direction toward the facet, wherein the light source preferably is an optical fiber.
Embodiment 25:
   The structure of one of embodiments 20 to 24, further comprising:
   a back-end-of-line stack on the semiconductor substrate,
   wherein the first metal sheet of the optical signal blocker is disposed in the back-end-of-line stack.
Embodiment 26:
   The structure of embodiment 25, wherein the back-end-of-line stack includes a plurality of metallization levels each having a dielectric layer, and the first metal sheet of the optical signal blocker is disposed in the dielectric layer of the metallization level closest to the semiconductor substrate.
Embodiment 27:
   The structure of one of embodiments 20 to 26, wherein the first metal sheet of the optical signal blocker is spaced from the first portion of the waveguide core by a distance that permits the first metal sheet to block and absorb light propagating in the waveguide core.
Embodiment 28:
   The structure of one of embodiments 20 to 27, wherein the optical signal blocker includes a second metal sheet and a second plurality of openings in the second metal sheet, and the first metal sheet is disposed between the second metal sheet and the first portion of the waveguide core, wherein the second plurality of openings are preferably aligned with the first plurality of openings.
Embodiment 29:
   The structure of one of embodiments 20 to 28, wherein the first plurality of openings have a critical dimension in a range between 1 micrometer and 10 micrometers, and/or wherein the first metal sheet has a ratio of solid material to open space of less than or equal to 0.5.
Embodiment 30:
   The structure of one of embodiments 20 to 29, wherein the plurality of metal features are arranged in a two-dimensional array having a plurality of rows and a plurality of columns.
Embodiment 31:
   The structure of embodiment 30, wherein one of the rows overlaps with the first portion of the waveguide core, and/or wherein the first portion of the waveguide core is laterally positioned between an adjacent pair of the rows.
Embodiment 32:
   The structure of one of embodiments 20 to 31, wherein the plurality of metal features comprise copper or aluminum, and the waveguide core comprises silicon nitride.
Embodiment 33:
   A method for forming a structure for a photonic chip, the method comprising:
   forming a waveguide core; and
   forming an optical signal blocker including a metal sheet and a plurality of openings in the metal sheet,
   wherein the waveguide core is disposed between a semiconductor substrate and the optical signal blocker, and the waveguide core includes a first portion that is overlapped by the optical signal blocker.
Embodiment 34:
   The method of embodiment 33, wherein the structure of one of embodiments 1 to 32 is formed.

## Claims

1. A structure for a photonic chip, the structure comprising:
a semiconductor substrate;
an optical signal blocker comprising a plurality of metal features and/or a first metal sheet with a first plurality of openings in the first metal sheet; and
a waveguide core between the semiconductor substrate and the optical signal blocker, the waveguide core including a first portion that is overlapped by the optical signal blocker.

2. The structure of claim 1, wherein the first plurality of openings are arranged in a two-dimensional array having a plurality of rows and a plurality of columns.

3. The structure of claim 2, wherein one of the rows overlaps with the first portion of the waveguide core, and/or
wherein the first portion of the waveguide core is laterally positioned between an adjacent pair of the rows.

4. The structure of one of claims 1 to 3, wherein the first metal sheet comprises copper or aluminum, and the waveguide core comprises silicon nitride.

5. The structure of one of claims 1 to 4, wherein the waveguide core includes a second portion adjacent to the first portion, the second portion terminates at a facet, and further comprising:
a light source adjacent to the facet, the light source having a light output configured to provide light in a mode propagation direction toward the facet, wherein the light source preferably is an optical fiber.

6. The structure of one of claims 1 to 5, further comprising:
a back-end-of-line stack on the semiconductor substrate,
wherein the first metal sheet of the optical signal blocker is disposed in the back-end-of-line stack.

7. The structure of claim 6, wherein the back-end-of-line stack includes a plurality of metallization levels each having a dielectric layer, and the first metal sheet of the optical signal blocker is disposed in the dielectric layer of the metallization level closest to the semiconductor substrate.

8. The structure of one of claims 1 to 7, wherein the first metal sheet of the optical signal blocker is spaced from the first portion of the waveguide core by a distance that permits the first metal sheet to block and absorb light propagating in the waveguide core.

9. The structure of one of claims 1 to 8, wherein the optical signal blocker includes a second metal sheet and a second plurality of openings in the second metal sheet, and the first metal sheet is disposed between the second metal sheet and the first portion of the waveguide core, wherein the second plurality of openings are preferably aligned with the first plurality of openings.

10. The structure of one of claims 1 to 9, wherein the first plurality of openings have a critical dimension in a range between 1 micrometer and 10 micrometers, and/or
wherein the first metal sheet has a ratio of solid material to open space of less than or equal to 0.5.

11. The structure of one of claims 1 to 10, wherein the plurality of metal features are arranged in a two-dimensional array having a plurality of rows and a plurality of columns.

12. The structure of claim 11, wherein one of the rows overlaps with the first portion of the waveguide core, and/or wherein the first portion of the waveguide core is laterally positioned between an adjacent pair of the rows.

13. The structure of one of claims 1 to 12, wherein the plurality of metal features comprise copper or aluminum, and the waveguide core comprises silicon nitride.

14. A method for forming a structure for a photonic chip, the method comprising:
forming a waveguide core; and
forming an optical signal blocker including a metal sheet and a plurality of openings in the metal sheet,
wherein the waveguide core is disposed between a semiconductor substrate and the optical signal blocker, and the waveguide core includes a first portion that is overlapped by the optical signal blocker.

15. The method of claim 14, wherein the structure of one of claims 1 to 13 is formed.
